# EUROPEAN PATENT SPECIFICATION

(11) **EP 4 579 880 B1**
(45) Date of publication and mention of the grant of the patent: **01.07.2026**
(21) Application number: 24200192.3
(22) Date of filing: 13.09.2024
(51) Int. Cl.: H01M 10/613, H01M 10/6556, H01M 50/204, H01M 50/342, H01M 50/367

(54) **BATTERY PACK CASE, BATTERY PACK AND ELECTRIC DEVICE**
BATTERIEPACKGEHÄUSE, BATTERIEPACK UND ELEKTRISCHE VORRICHTUNG
BOÎTIER DE BLOC-BATTERIE, BLOC-BATTERIE ET DISPOSITIF ÉLECTRIQUE

(30) Priority: 29.12.2023 CN 202311867762
(43) Date of publication of application: 02.07.2025
(73) Proprietor: Xiaomi EV Technology Co., Ltd., Beijing 100176 (CN)
(72) Inventor: TANG, Jie, Beijing, 100176 (CN)
(74) Representative: Stöckeler, Ferdinand

(56) References cited:
- EP-A1- 3 796 412
- WO-A1-2023/016472
- CN-U- 219 329 346
- DE-U1- 202021 107 075
- US-A1- 2022 123 427

## Description

### FIELD

The present invention relates to the field of batteries, in particular to a battery pack case, a battery pack and an electric device.

### BACKGROUND

A battery pack is an apparatus used to store and provide energy to electric devices, which is a core component of the electric device and an important research trend of energy transformation in the future. During operation, battery packs may generate a large quantity of heat which must be managed and removed to prevent damage to the battery pack.

EP 3796412A1 discloses a battery pack. The battery pack comprises a case, a cavity structure being provided in the bottom of the case; and a plurality of battery cells, the plurality of battery cells being stacked at the bottom of the case, and an end surface, facing the bottom of the case, of each of the battery cells being provided with an explosion-proof valve, wherein a structural layer, facing the explosion-proof valve, of the bottom of the case is provided with a weak area, and gas in the battery cell during thermal runaway of any battery cell may be collected via the weak area into the cavity structure and then is discharged.

US 2022/123427 A1 discloses a power battery pack and a vehicle. The power battery pack includes a battery tray and several battery cells disposed on the battery tray. Each of the battery cells has a cell anti-explosion valve. The battery tray includes a tray body. At least a part of the tray body is formed therein with an air passage. The tray body is pro-vided with several inlet vents and at least one exhaust vent. At least part of the inlet vents and the cell anti-explosion valves are disposed opposite to each other and correspond one-to-one to each other.

CN 219329346U discloses a battery tray and a battery pack, wherein the battery tray comprises a bottom plate, two side beams and two side beams; the two side beams and the two side beams are respectively connected to the peripheral edge of the bottom plate and enclose with the bottom plate to form an accommodating cavity; the side beams and/or the side beams are provided with an exhaust valve; the battery cell assembly comprises a plurality of battery cells arranged side by side; the battery cells are provided with explosion-proof valves; partition beams are connected between the side beams; and a first exhaust channel is formed on the partition beams. The first exhaust passage and the second exhaust passage are communicated with each other, the first exhaust passage is communicated with the exhaust valve, the two sides of the partition beam are respectively provided with first air holes for communicating the first exhaust passage and the explosion-proof valve, and the two sides of the partition beam are respectively provided with second air holes for communicating the first exhaust passage and the second exhaust passage. In this way, after the battery cell is out of control, the air pressure inside the package increases, and the pressure can be effectively loaded to the exhaust valve, so as to ensure the smooth opening of the exhaust valve and achieve the purposes of effective pressure relief and heat dissipation.

DE 202021107075U1 discloses a battery pack comprising a lower box of the battery pack, a top cover, a battery module, and a high- and low-voltage electrical component, wherein the lower box of the battery pack comprises a main body of the lower box, characterized in that the main body of the lower box comprises an edge support frame, a lower protective plate, a liquid cooling plate, and an inner cross member, wherein the inner cross member divides the main body of the lower box into several battery receiving cavities for receiving the battery modules, and wherein the edge support frame has an inlet opening, a drain channel, and a drain opening, and wherein the inlet opening is connected to the drain opening by the drain channel, and wherein the inlet opening is used to discharge the heat generated during a thermal to direct the gas and flame stream generated by the runaway of the battery cell of the battery module into the drain channel, and wherein the drain opening is used to discharge the gas and flame stream flowing through the drain channel into the drain opening from the main body of the lower box, and wherein the electrical high and low voltage component comprises a battery management system that assesses whether thermal runaway occurs in the battery module, and wherein, in the event of thermal runaway, the battery management system controls the cooling channel to cool only the battery pack.

WO2023/016472A1 discloses a battery module, a battery pack, and a vehicle. The battery module comprises a battery body, end plates, and a cover; the battery body comprises a plurality of battery cells; the plurality of battery cells are arranged side by side; the end plate is disposed attends of the battery body. According to the battery module, end pleas are provided at the ends the battery body, a first gas discharge channel is provided inside each end plate, the cover is fastened on a plurality of pressure relief valves to form a second gas discharge channel, and the second gas discharge channel is communicated with the first gas discharge channels.

### SUMMARY

The purpose of the present invention is to provide a battery pack case, a battery pack and an electric device, so as to at least partially solve the technical problems existing in the related art.

The invention is set out in the appended set of claims.

In order to achieve the above object, a first aspect of the present invention provides a battery pack case, and the battery pack case comprises an accommodating space (10), and the accommodating space is configured to accommodate a plurality of battery cell units; a plurality of first air passages, which are mutually independent, are arranged in the battery pack case such that battery cells of each of the plurality of battery cell units can communicate with the outside of the battery pack through a separate first air passage.

Optionally, the battery pack case includes a bottom plate structure; the plurality of the first air passages are provided inside the bottom plate structure.

Optionally, the bottom plate structure includes a first plate, a second plate and at least one partition beam; the first plate and the second plate are stacked, and a cavity is provided between the first plate and the second plate; the partition beam is arranged in the cavity to divide the cavity into the plurality of first air passages; the first plate is provided with a plurality of weak areas communicating with the cavity, and the positions of the plurality of weak areas correspond to explosion-proof valves of the battery cells in corresponding battery cell units.

Optionally, the second plate includes a body and a side plate, and the side plate is provided at the peripheral edge of the body to define a concave portion, and the concave portion and the first plate jointly define the cavity.

Optionally, one end of the side plate far from the body has an extension portion, and the extension portion is arranged in parallel with the body and connected with the first plate.

Optionally, a cross section of the partition beam gradually increases in the direction from the first plate to the second plate.

Optionally, the partition beam is provided with a first plane, and the first plane is in surface contact with the first plate; and/or, the partition beam is provided with a second plane, and the second plane is in surface contact with the second plate.

Optionally, the partition beam and the first plate are in no-pressure contact, pressure connection, welding or bonding; and/or, the partition beam and the second plate are in no-pressure contact, pressure connection, welding or bonding.

Optionally, a connection part between the partition beam and the first plate is arranged in a staggered manner with the weak area.

Optionally, the bottom plate structure further includes at least one supporting block; at least one supporting block is provided in the cavity, and an upper end of the supporting block is connected to the first plate, and a lower end of the supporting block is connected to the second plate.

According to the invention, the battery pack case further includes a plurality of explosion-proof valves of battery pack; the body of the battery pack case is also provided with a plurality of independent second air passages; one end of the plurality of second air passages is suitable for communicating with the corresponding first air passages respectively, and the other end is suitable for connecting with the corresponding explosion-proof valve of the battery pack.

Optionally, the plurality of battery cell units are arranged along a width direction of the battery pack case; the plurality of the first air passages are arranged along the width direction of the battery pack case.

Optionally, the number of the battery cell units is two, and the two battery cell units are symmetrically arranged with respect to a center of the width of the battery pack case; the number of the first air passages is two, and the two first air passages are symmetrically arranged with respect to the center of the width of the battery pack case.

Optionally, the battery pack case has two explosion-proof valves of the battery pack, and the two explosion-proof valves of the battery pack are installed on a side frame in a longitudinal direction of the battery pack case; the side frame is provided with two second air passages; one of the two second air passages communicates with one first air passage and one explosion-proof valve of the battery pack, and the other of the two second air passages communicates with another first air passage and another explosion-proof valve of the battery pack.

Optionally, the battery pack case includes a tray and an upper cover; the tray includes a bottom plate structure and a side frame, and a lower end of the side frame is connected to a peripheral edge of the bottom plate structure, and the upper cover is connected to an upper end of the side frame; the tray and the upper cover jointly define the accommodating space; the first air passage is provided inside the bottom plate structure.

According to a second aspect of the present invention, a battery pack is provided, including a plurality of battery cell units and the battery pack case, a plurality of battery cell units are provided in the accommodating space; each battery cell unit corresponds to one of the first air passages, and each battery cell unit communicates with the outside of the battery pack through the corresponding first air passage.

Optionally, each battery cell unit includes a plurality of battery cells, and each battery cell is provided with an explosion-proof valve of the battery cell, and the explosion-proof valve of the battery cell is provided corresponding to an inlet of the first air passage.

Optionally, the battery pack includes a bottom plate structure, and the first air passage is provided in the bottom plate structure; the explosion-proof valve of the battery cell is located at a lower end of the battery cell, such that the explosion-proof valve of the battery cell is configured to correspond to the inlet of the first air passage.

Optionally, the battery pack further includes a heat exchange structure; the heat exchange structure includes a plurality of heat exchange plates, and the plurality of heat exchange plates are arranged in parallel, and the heat exchange plate is provided between two adjacent rows of battery cells; and, the flow passages inside the plurality of heat exchange plates are independently arranged.

Optionally, the heat exchange structure further includes an inlet pipe and an outlet pipe; the inlets of the plurality of heat exchange plates are respectively connected to the inlet pipe, and the outlets of the plurality of heat exchange plates are respectively connected to the outlet pipe.

Optionally, the heat exchange plate extends along a length direction of the battery pack, and the inlet pipe and the outlet pipe extend along a width direction of the battery pack; the inlet pipe and the outlet pipe are provided at a first side in the length direction of the battery pack.

Optionally, an electrode of each of the plurality of battery cell units is located at a second side in the length direction of the battery pack.

Optionally, any of the plurality of battery cell units is configured to independently be charged or discharged; part or all of the battery cell units in the plurality of battery cell units are configured to be connected in series as a whole for charging or discharging.

According to a third aspect of the present invention, an electric device is provided, which includes a main body of the device and a battery pack, and the battery pack is installed on the main body of the device and used for supplying power to the main body of the device.

According to the technical solution, the battery pack case is provided, and a plurality of independent first air passages are provided to communicate with the battery cells of the battery cell units, which may ensure that the first air passages of each battery cell unit are independent; therefore, when a single cell unit has the problem of thermal runaway, because the single cell unit corresponds to an independent first air passage, the work of other battery cell units may not be affected so that the heat spread and the aggravation of thermal runaway may be avoided.

Other features and advantages of the present invention will be described in detail in the following detailed description.

### BRIEF DESCRIPTION OF THE DRAWINGS

The accompanying drawings are provided to provide a further understanding of the present invention and constitute a part of the specification, and together with the following detailed description, serve to explain the present invention, but do not constitute a limitation of the present invention. In the attached drawings:
FIG. 1 is a schematic structural view of each component of a battery pack provided by an illustrative embodiment of the present invention in an exploded state;
FIG. 2 is a top view of a bottom plate structure provided by an illustrative embodiment of the present invention;
FIG. 3 is a schematic sectional view along line A-A in FIG. 2;
FIG. 4 is an enlarged schematic view of part B in FIG. 3;
FIG. 5 is an enlarged schematic view of part C in FIG. 3;
FIG. 6 is a top view of the bottom plate structure with the first plate hidden, provided by an illustrative embodiment of the present invention;
FIG. 7 is a schematic exploded structural view of each component of the bottom plate structure provided by an illustrative embodiment of the present invention;
FIG. 8 is a schematic exploded structural view of each component of the tray provided by an illustrative embodiment of the present invention;
FIG. 9 is a structural schematic view of a side frame in a longitudinal direction of a battery pack provided by an illustrative embodiment of the present invention;
FIG. 10 is a schematic structural view of the side frame from another perspective in a longitudinal direction of a battery pack provided by an illustrative embodiment of the present invention;
FIG. 11 is a schematic sectional view along line D-D in FIG. 9;
FIG. 12 is a schematic plan view of a heat exchange structure provided by an illustrative embodiment of the present invention;
FIG. 13 is a schematic plan view of the heat exchange structure and the battery cell provided by an illustrative embodiment of the present invention in an assembled state;
FIG. 14 is a schematic structural view of a battery cell provided by an illustrative embodiment of the present invention, in which an explosion-proof valve is arranged at a lower end of the battery cell;
FIG. 15 is a partial structural schematic view of a battery pack provided by an illustrative embodiment of the present invention, in which a tray and a battery cell unit are shown;
FIG. 16 is a schematic circuit view of a battery pack provided by an illustrative embodiment of the present invention.

### DETAILED DESCRIPTION

Hereinafter, specific embodiments of the present invention will be described in detail with reference to the accompanying drawings. It should be understood that the specific embodiments described here are only used to illustrate and explain the present invention, and are not used to limit the present invention.

In the related art, heat spread easily occurs among a plurality of battery cell units on a battery pack, which leads to thermal runaway and affects the thermal management of the whole battery pack.

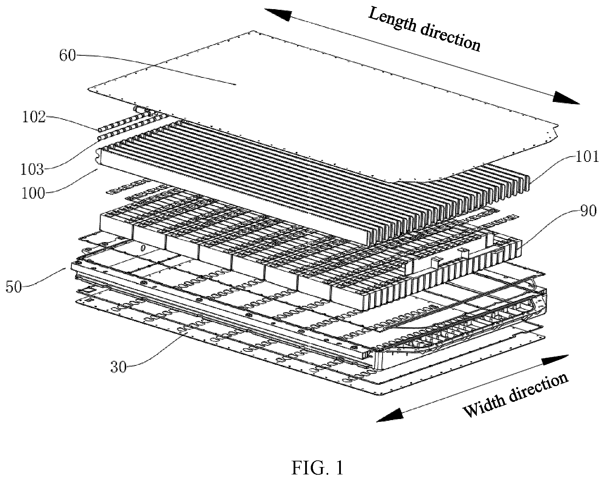

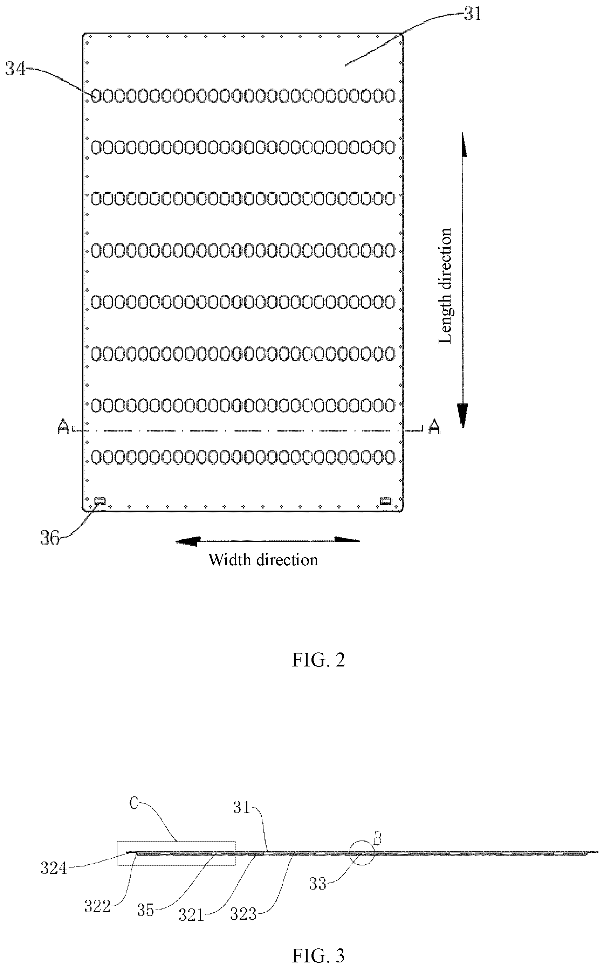

In the present invention, it should be understood that in the present invention, the azimuth or positional relationship indicated by directional words such as "up" and "down" are defined based on the direction shown in the corresponding drawings, only for the convenience of describing the present invention and simplifying the description, and do not indicate or imply that the referred apparatus or element must have a specific orientation and a specific azimuth structure and operation, so it may not be understood as a limitation of the present invention. For "length direction" and "width direction", please refer to the labels "length direction" and "width direction" shown in FIGS. 1 and 2. In addition, it should be noted that the terms such as "first" and "second" are used to distinguish one element from another, which are not sequential or indicating importance. In addition, in the description with reference to the drawings, the same reference numerals in different drawings indicate the same elements.

In the description of the present invention, it should also be noted that unless otherwise specified and limited, the terms "provide", "connect", "couple" and "install" should be broadly understood, for example, they may be fixed connection, detachable connection or integrated connection; they may be direct connection or indirect connection through an intermediary. For those skilled in the art, the specific meanings of the above terms in the present invention may be understood according to specific situations.

It is found that in the related technology, the main reason why the battery pack is prone to thermal spread and thermal runaway is that a plurality of battery cell units of the battery pack are connected with the outside of the battery pack through a common heat dissipation passage, this arrangement will cause that when one or a part of the battery cell unit are out of thermal control, other normal battery cells will be affected, which will lead to the aggravation of thermal spread and thermal runaway and affect the thermal management of the whole battery pack.

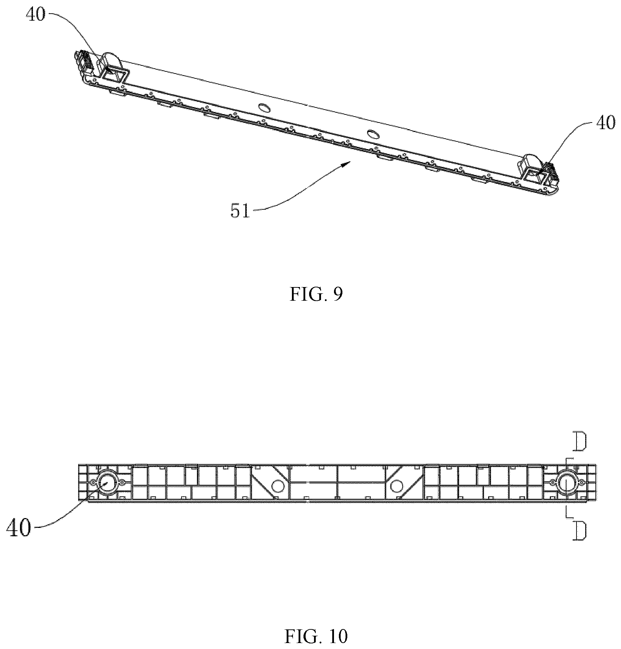

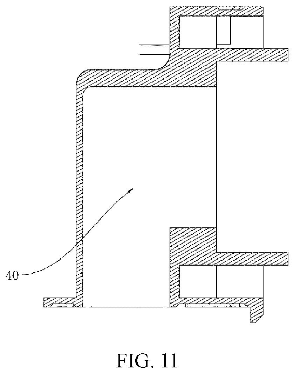

Therefore, as shown in FIGS. 1 to 15, the present invention provides a battery pack case, in which an accommodating space 10 is defined and the accommodating space 10 is used for accommodating a plurality of battery cell units 90, and a plurality of mutually independent first air passages 20 are provided in the battery pack case, so that the battery cells 91 of the plurality of battery cell units 90 are suitable for communicating with the outside of the battery pack through separate first air passages 20. The plurality of first air passages 20 includes two or more first air passages 20.

In the present invention, by providing the plurality of independent first air passages 20 to communicate with the battery cells 91 of the battery cell units 90, the first air passage 20 of each battery cell unit 90 may be ensured to be independent. Therefore, when a single battery cell unit 90 has the problem of thermal runaway, because the single battery cell unit 90 corresponds to the independent first air passage 20, the work of other battery cell units 90 may not be affected, so that the heat spread and the aggravation of thermal runaway may be avoided.

It may be understood that in the present invention, the battery pack case is a case structure for accommodating the battery cell unit 90, which may have any suitable structure. For example, optionally, the battery pack case may refer to the tray 50 as shown in FIG. 1, in which circumstance the accommodating space 10 may be defined by the tray 50 alone, and the battery pack case page may refer to the tray 50 and the upper cover 60 connected to the upper end of the tray 50 as shown in FIG. 1, in which case the accommodating space 10 may be defined by the tray 50 and the upper cover 60.

Furthermore, it may be understood that in the present invention, a plurality of battery cell units 90 include two or more battery cell units 90, each battery cell unit 90 may include at least one battery cell group, each battery cell group may include a plurality of battery cells 91 connected in series, and all battery cells 91 in the same battery cell unit 90 may be connected in series. The battery cell units 90 may be connected in parallel and/or in series.

The present invention does not limit the specific position of the first air passage 20. For example, the first air passage 20 may be provided at the top or bottom of the battery pack, and the specific position of the first air passage may be specifically designed based on the structures of the battery cell 91 (for example, based on the position of the explosion-proof valve 911 of the battery cell) and the battery pack, as long as the first air passages 20 connected between the plurality of battery cell units 90 may be independent and will not affect each other.

For example, referring to FIGS. 3 to 5, in an embodiment of the present invention, the first air passage 20 may be disposed at the bottom of the battery pack. Specifically, the battery pack case includes a bottom plate structure 30, and a plurality of (two or more) first air passages 20 are disposed inside the bottom plate structure 30. This design facilitates the installation of the battery cell 91, and is also beneficial to corresponding to the embodiment in which the explosion-proof valve 911 of the battery cell is provided at the lower end of the battery cell 91.

In addition, the first air passage 20 arranged in the bottom plate structure 30 may also be used as a buffer space for complex mechanical working conditions such as battery pack bottom knocking (striking) and bottom scraping, so as to realize multiple utilization of the same space. In other words, the first air passage 20 may be used for exhausting air and also be used as a buffer space during knocking and bottom scraping.

The present invention does not limit the configuration of the first air passage 20, for example, an exhaust pipe or an exhaust cavity may be provided, as long as it is ensured that the explosion-proof valve 911 of the battery cell of the battery cell 91 of the battery cell unit 90 may communicate with the outside of the battery pack case.

As shown in FIGS. 2 to 6, in an embodiment of the present invention, the bottom plate structure 30 includes a first plate 31, a second plate 32 and at least one partition beam 33, and the first plate 31 and the second plate 32 are stacked, and there is a cavity between the first plate 31 and the second plate 32, and the partition beam 33 is arranged in the cavity to divide the cavity into the plurality of first air passages 20; the partition beam 33 is used to divide the cavity formed by the butting connection of the first plate 31 and the second plate 32 into the plurality of independent first air passages 20, and the number of the first air passages 20 is not limited, but may be determined according to the number of the battery cell units 90.

The partition beam 33 connects the first plate 31 and the second plate 32, and the connection position may be in no-pressure contact, pressure connection (such as hot-pressing connection, abutting connection), welding or bonding, as long as there is no gap at the connection position. In other words, the partition beam 33 may be in no-pressure contact, pressure connection (such as hot-pressing connection or abutment), welding or bonding with the first plate 31, and the partition beam 33 may be in no-pressure contact, pressure connection (such as hot-pressing connection or abutment), welded or bonded with the second plate 32, which is not limited in the present invention. For example, the partition beam 33 may be connected with the first plate 31 and the second plate 32 by hot pressing, and the hot-pressing method has good bonding strength and ensure a reliable connection between the first plate 31 and the second plate 32.

It may be understood that "no-pressure contact" here means that the partition beam 33 is just in contact with the first plate 31, and the partition beam 33 is just in contact with the second plate 32, and there is no interaction force between the partition beam 33 and the first plate 31 and between the partition beam 33 and the second plate 32.

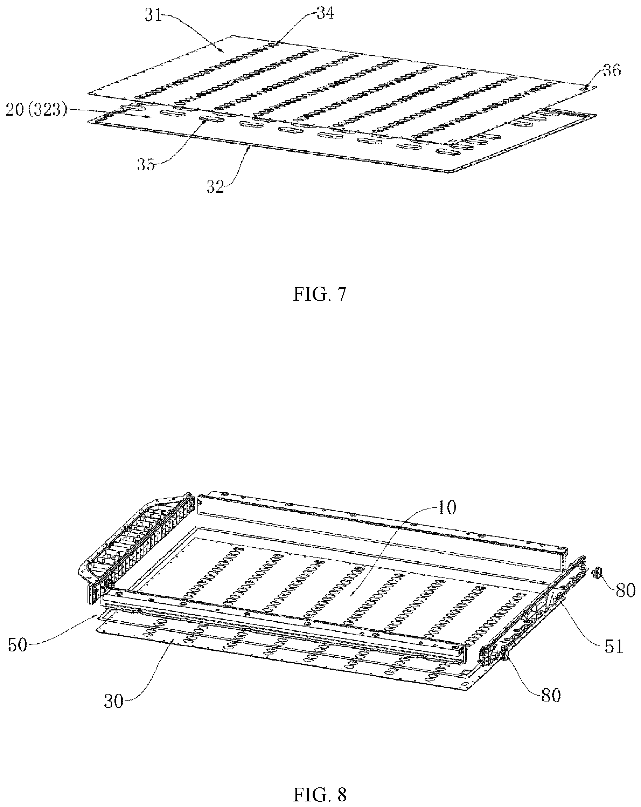

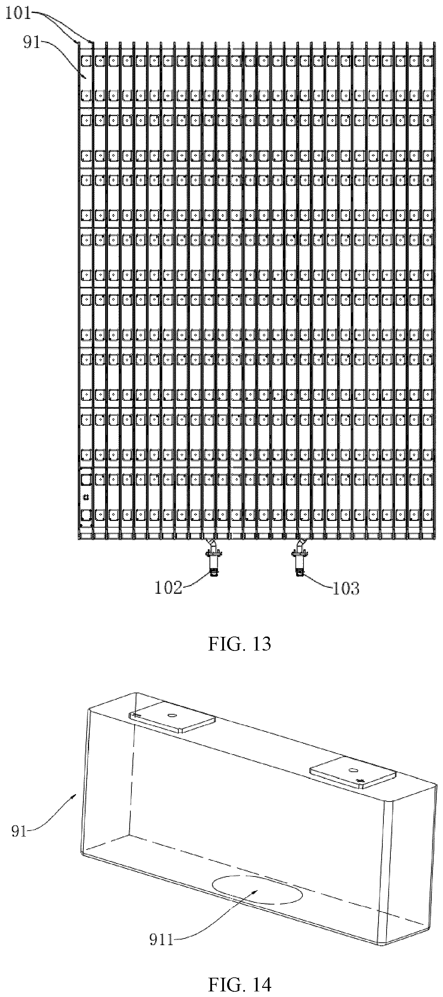

In the present invention, as shown in FIGS. 7 and 14, each battery cell 91 may be provided with an explosion-proof valve 911 of the battery cell, and the explosion-proof valve 911 of the battery cell may be provided at the lower end of the battery cell 91. The first plate 31 is provided with a plurality of weak areas 34 communicating with the cavity, and the positions of the weak areas 34 correspond to the explosion-proof valves 911 of battery cell in the corresponding battery cell unit 90. As shown in FIG. 2, the weak area 34 may be provided on the first plate 31, and the battery cell unit 90 is installed on the first plate 31. The battery cell 91 of the battery cell unit 90 is provided with the explosion-proof valve 911 of the battery cell, and the explosion-proof valve 911 of the battery cell corresponds to the weak area 34. When the explosion-proof valve 911 of the battery cell is opened, air may break through the weak area 34, and the generated air will flow to the inside of the first air passage 20 and then be discharged to the outside of the battery pack case from the first air passage 20.

The present invention does not limit the specific structure of the weak area 34. For example, the weak area 34 may be a through hole or a weak structure (such as a film) that may be broken by air after the explosion-proof valve 911 of the battery cell is opened.

In the embodiments where the weak area 34 is a through hole, the through hole is equivalent to the inlet of the first air passage 20. When the explosion-proof valve 911 of the battery cell is opened, the generated air will flow to the inside of the first air passage 20 through the inlet, and then be discharged from the first air passage 20 to the outside of the battery pack case, thus completing the air discharged.

It may be understood that the explosion-proof valve 911 of the battery cell may be arranged at the upper end of the battery cell 91 in addition to the lower end.

Optionally, the first plate 31 and the second plate 32 may be provided as a multi-layer hot-pressed composite plate, with the inner surface provided as a high-temperature resistant material and the outer surface provided as an impact resistant material. The multi-layer arrangement not only ensures that the inner surface is made of high temperature resistant material, but also ensures that the outer surface is made of impact resistant material. For example, the inner surface is provided with materials such as metal, alloy, carbon fiber, high-temperature plastic, etc. which maintain stability and mechanical properties at high temperature. The outer surface may select to, for example, use engineering plastics or aluminum alloys to remain intact and not easy to crack or damage when subjected to external forces such as impact or extrusion.

As shown in FIG. 3 to FIG. 5, the second plate 32 may include a body 321 and a side plate 322, and the side plate 322 is provided at the peripheral edges of the body 321 to define a concave portion 323, and the concave portion define a cavity together with the first plate 31. The cavity is provided as the first air passage 20, and compared with other ways (such as pipes, passages, etc.), the exhaust space is larger and the speed is faster, which may prevent heat accumulation with a simple structure.

In order to facilitate the connection between the first plate 31 and the second plate 32, as shown in FIG. 3, one end of the side plate 322 far from the body 321 has an extension portion 324, and the extension portion 324 may be arranged in parallel with the body 321 and connected with the first plate 31. Since the first air passages 20 need to be independent from each other, the connection between the first plate 31 and the second plate 32 needs to be stable and reliable. For example, if the connection position between the first plate 31 and the second plate 32 is loose, the size of the cavity formed by the two plates may be inconsistent in thickness; however, because the partition beam 33 is provided according to the corresponding cavity when the first plate 31 and the second plate 32 are normally connected, a gap may be formed between a plurality of first air passages 20 separated by the partition beam 33, and air leakage may occur at this gap, so that independent use among a plurality of first air passages 20 may not be realized. Therefore, arranging the extension portion 324 in parallel with the body 321 and connecting the extension portion 324 with the first plate 31 facilitates the stable and reliable connection between the first plate 31 and the second plate 32.

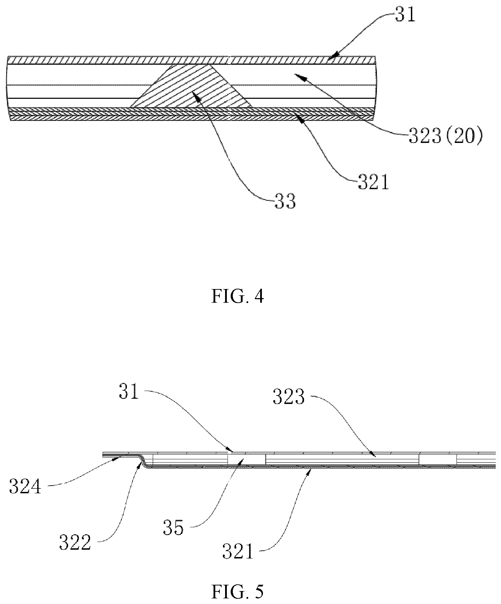

As shown in FIG. 5, the connection position between the side plate 322 and the body 321 may be provided as a chamfering, and the connection position between the side plate 322 and the mounting extension portion 324 may be provided as a chamfering. With this design, air transmission may be smooth, and heat accumulation in corners is not easy to occur. At the same time, it is convenient to process, and with the chamfer, cracks are not easy to occur, which can reduce deformation and ensure the service life of the battery pack.

In the present invention, the specific shape of the partition beam 33 is not limited and the function of the partition beam 33 is to partition the cavity and divide the cavity into a plurality of independent first air passages 20, as long as the partition beam 33 may connect the first plate 31 and the second plate 32 and no connection gap occurs.

In order to ensure the stability of the support and installation of the connected partition beam 33, as shown in FIG. 4, the cross section of the partition beam 33 gradually increases in the direction from the first plate 31 to the second plate 32, that is, the partition beam is constructed as a structure with a small top and a large bottom. The cross section width of the partition beam 33 for connecting the second plate 32 is larger than the cross section width of the partition beam 33 for connecting the second plate 32, and the cross section of the partition beam 33 is similar to a trapezoidal structure.

In the present invention, the partition beam 33 may be provided with a first plane, for example, the upper end face of the partition beam 33 may be a first plane, and the first plate 31 may be correspondingly provided with a plane, and the first plane is in surface contact with the first plate 31, so that the partition beam 33 and the first plate 31 may be realized in plane connection, which may improve the reliability of the connection between the partition beam 33 and the first plate 31 and the sealing between the partition beam 33 and the first plate 31, thus beneficial to improving the independence among the plurality of first air passages 20.

In the present invention, the partition beam 33 may be provided with a second plane, for example, the lower end face of the partition beam 33 may be a second plane, and the second plate 32 may be correspondingly provided with a plane, and the second plane is in surface contact with the second plate 32, so that the partition beam 33 and the second plate 32 may be realized in plane connection, which may improve the reliability of the connection between the partition beam 33 and the second plate 32 and the sealing between the partition beam 33 and the second plate 32, thus beneficial to improving the independence among the plurality of first air passages 20..

In order to prevent the partition beam 33 from affecting the exhaust of the weak area 34, in the present invention, the connection position between the partition beam 33 and the first plate 31 is arranged in a staggered manner with the weak area 34. That is, the projection of the part where the partition beam 33 is connected to the first plate 31 on the first plate 31 at least partially does not coincide with the projection of the weak area 34 on the first plate 31. In this way, the partition beam 33 will not affect the exhaust or heat dissipation of the weak area 34.

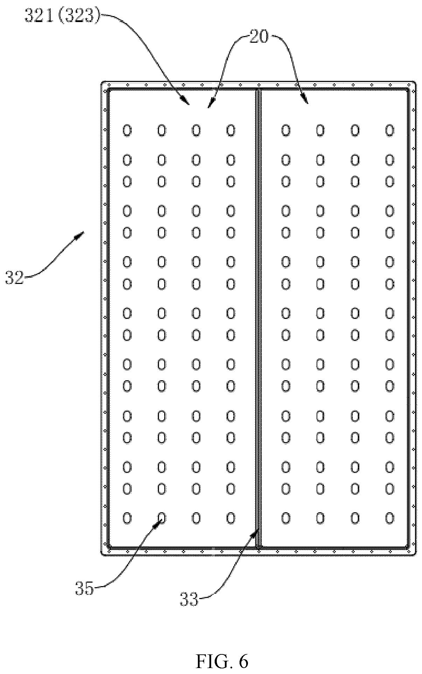

Because the battery cell units 90 are installed on the first plate 31, the whole first plate 31 bears a large weight. In view of this, as shown in FIGS. 5 and 6, the bottom plate structure 30 further includes at least one supporting block 35, and the at least one supporting block 35 is provided in the cavity, and the upper end of the supporting block 35 is connected to the first plate 31, and the lower end of the supporting block 35 is connected to the second plate 32. By arranging the supporting block 35 to support the first plate 31, the upper end of the supporting block 35 is connected to the first plate 31, and the lower end of the supporting block 35 is connected to the second plate 32, which may effectively improve the bearing capacity of the first plate 31 and help to avoid the problem that the first plate 31 would be depressed.

It should be explained that when the number of the supporting blocks 35 is plural, as shown in FIGS. 6 and 7, the plurality of supporting blocks 35 may be uniformly arranged on the cavity, and may be staggered with the weak area 34. The function of uniform arrangement is to ensure that the whole panel and part of the position of the first plate 31 will not be depressed, and the position of the whole first plate 31 may be taken into account. In addition, the supporting block 35 is arranged in a staggered manner with the weak area 34, so that the supporting block 35 will not affect the exhaust or heat dissipation of the weak area 34.

The present invention does not limit that specific connection relationship between the supporting block 35 and the first plate 31 and between the supporting block 35 and the second plate 32. For example, welding, bonding or pressure connection may be used. Optionally, in an embodiment of the present invention, the connection between the supporting block 35 and the first plate 31 and between the supporting block 35 and the second plate 32 may be connected by adopting hot pressing, and the bonding strength is good by adopting hot pressing, so that the connection between the first plate 31 and the second plate 32 is reliable.

In the present invention, there is no restriction on how the first air passage 20 communicates with the outside of the battery pack case, for example, a pipe connection, a cavity or a hole in the side wall may be used as long as the first air passage 20 may communicate with the outside of the battery pack case.

As shown in FIG. 8 to FIG. 11, the battery pack case may further include a plurality of explosion-proof valves 80 of the battery pack, and a plurality of independent second air passages 40 are also provided on the battery pack case, and one end of the plurality of second air passages 40 is respectively suitable for communicating with the corresponding first air passages 20, and the other end is suitable for connecting the corresponding explosion-proof valves 80 of the battery pack.

The present invention does not limit the position of the second air passage 40. For example, referring to FIG. 7, the first plate 31 may be provided with an air outlet 36 communicating with the first air passage 20, and the air outlet 36 may be connected with the second air passage 40. Thus, one end of the second air passage 40 communicates with the first air passage 20 by connecting the air outlet 36, and the other end of the second air passage 40 communicates with the outside of the battery pack case through the explosion-proof valve 80 of the battery pack, and thus the communication between the first air passage 20 and the outside of the battery pack case is completed. As shown in FIG. 8, the explosion-proof valve 80 of the battery pack may be installed outside the battery pack case, specifically on the side frame 51 of the tray 50.

As shown in FIG. 8, the connection position between the second air passage 40 and the first air passage 20 may be bonded with structural adhesive to prevent the gap from leaking.

The present invention does not limit the arrangement direction of the first air passage 20, and may be designed according to the specific arrangement of a plurality of battery cell units 90. As shown in FIGS. 1 to 3, a plurality of battery cell units 90 are arranged along the width direction of the battery pack case, and a plurality of first air passages 20 may be arranged along the width direction of the battery pack case. With this design, the position of the first air passage 20 corresponds to the corresponding battery cell unit 90 on the battery pack, which is beneficial to simplifying the structure of the first air passage 20.

The number of the first air passages 20 is not limited in the present invention, and may be determined according to the number of the battery cell units 90.

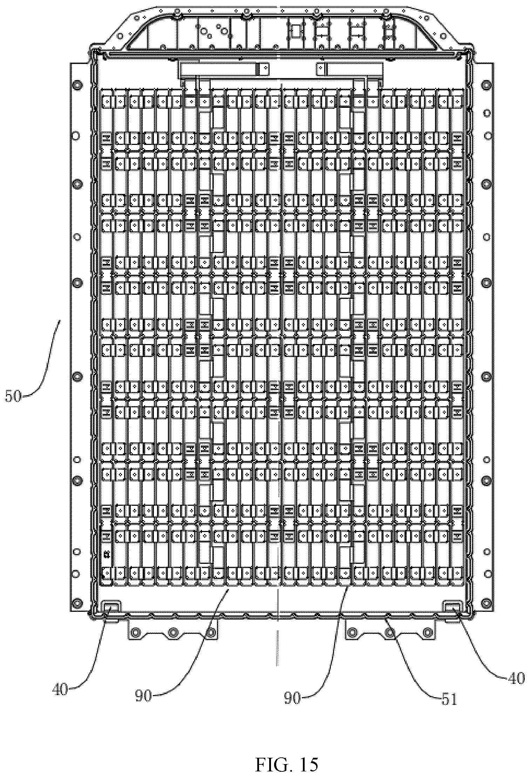

Referring to FIG. 1 and FIG. 15, in the present invention, a plurality of battery cell units 90 may be arranged along the width direction of the battery pack, and each battery cell unit 90 may include at least one battery cell group, and the battery cells 91 in each battery cell group extend along the length direction of the battery pack, in other words, the wide face (large face) of each battery cell 91 faces the width direction of the battery pack, and the narrow face (small face) of each battery cell 91 faces the length direction of the battery pack, and both the anode and cathode of the battery cell 90 are located in the direction corresponding to the narrow surface of the battery cell 91.

It may be understood that the wide face of the battery cell refers the face of the battery cell 91 having a relatively larger area among the plurality of faces located in the length direction of the battery pack. For example, in the state that the battery pack is installed at the bottom of a vehicle, the wide face of the battery cell 91 is the face defined by the sides in the length direction and the height direction of the battery cell 91. The narrow surface of the battery cell 91 is a surface defined by the sides in the width direction and the height direction of the battery cell 91.

The present invention does not limit the number of battery cells 91 in each battery cell group, and each battery cell group may include a plurality of rows of battery cells 91 arranged along the length direction of the battery pack, and each row of battery cells includes a plurality of battery cells 91 arranged along the width direction of the battery pack. In the same cell group, the battery cells 91 in each row of battery cells are connected in series, and the adjacent two rows of battery cells are connected in series.

In embodiments shown in FIGS. 1 and 15, the number of battery cell units 90 is two, and the two battery cell units 90 are arranged along the width direction of the battery pack. Correspondingly, as shown in FIG. 3, the number of first air passages 20 may be two, and the two first air passages 20 may be symmetrically arranged with respect to the center of width of the battery pack case, so that the two battery cell units 90 may communicate with the outside of the battery pack by using the two first air passages 20 respectively.

In the present invention, as shown in FIG. 8, the battery pack case has two explosion-proof valves 80 of the battery pack, which are installed on the side frame 51 of the battery pack case in the longitudinal direction, and the side frame 51 of the battery pack case in the longitudinal direction is provided with two second air passages 40, one of two second air passages 40 communicates with one first air passage 20 and one explosion-proof valve 80 of the battery pack, and the other of the two second air passages 40 communicates with another first air passage 20 and another explosion-proof valve 80 of the battery pack.

Installing the explosion-proof valve 80 of the battery pack on the side frame 51 in the length direction of the battery pack may save the size of the battery pack in the width direction. When the battery pack is applied to a vehicle, the width space is relatively compact, and this design is convenient for the installation of the battery pack when it is used.

As shown in FIG. 1, according to another aspect of the present invention, a battery pack is provided, which includes a plurality of battery cell units 90 and the battery pack case described above, and the plurality of battery cell units 90 are arranged in the accommodating space 10, and each battery cell unit 90 corresponds to one first air passage 20, and each battery cell unit 90 communicates with the outside of the battery pack through the corresponding first air passage 20, that is, each battery cell unit 90 communicates with the outside of the battery pack through one separate first air passage 20. The battery cell unit 90 is the battery cell unit 90 described above.

As shown in FIG. 1, the battery pack case may include a tray 50 and an upper cover 60, and the tray 50 includes a bottom plate structure 30 and a side frame 51, the lower end of the side frame 51 is connected to the four peripheral edges of the bottom plate structure 30, and the upper cover 60 is connected to the upper end of the side frame 51, and an accommodating space 90 is jointly defined between the tray 50 and the upper cover 60, and the first air passage 20 is arranged inside the bottom plate structure 30.

The locking of all parts of the battery pack case may be connected by screws, which is convenient to assemble and disassemble and simple in design. For example, the upper cover 60 may be connected to the side frame 51 with screws.

Optionally, when the battery pack is suitable for a vehicle, the upper cover 60 is suitable to be arranged on the lower side of the floor of the vehicle, or the upper cover 60 is suitable to be used as a part of the floor of the vehicle, that is, the upper cover 60 may be separate, located under the floor of the vehicle, and may also be used as the floor (pedal) of the vehicle. When adopting the latter structure, it is beneficial to save the Z-direction space of the vehicle, improve the utilization rate of the Z-direction installation space of the battery pack of the vehicle, allow the installation of batteries with larger capacity, and improve the cruising range of the vehicle.

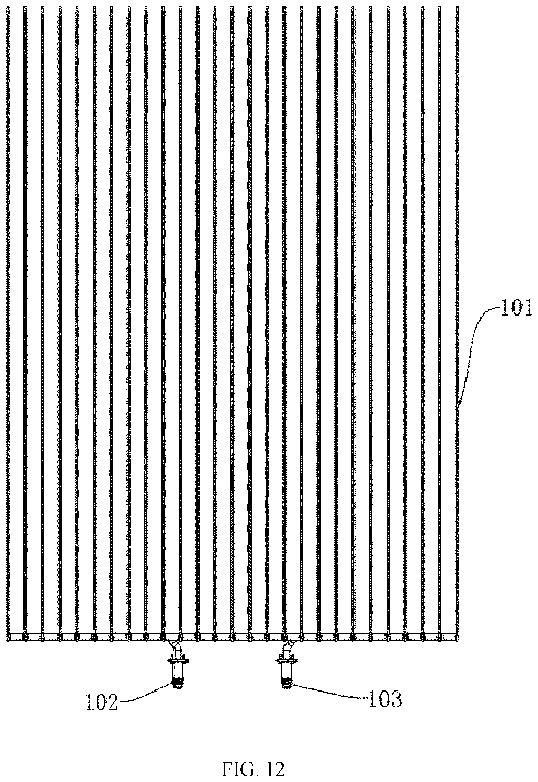

In the present invention, as shown in FIG. 12 and FIG. 13, the battery pack may further include a heat exchange structure 100, which includes a plurality of heat exchange plates 101 arranged in parallel, and the heat exchange plate 101 is arranged between two adjacent rows of battery cells 91, and the flow passages inside the plurality of heat exchange plates 101 are arranged independently. For example, the heat exchange plates 101 may be connected in parallel, so that the flow passages inside the heat exchange plates 101 are arranged independently and thus the plurality of heat exchanger plate 101 do not interact with each other. The function of arranging the heat exchange plate 101 is to cool or heat the battery cell 91. Because the plurality of heat exchange plates 101 are arranged in parallel, and the flow passages inside the plurality of heat exchange plates 101 are independent of each other, in other words, different heat exchange plates 101 will not affect each other, so that the cooling or heating effect may be ensured.

Optionally, as shown in FIG. 13, each heat exchange plate 101 extends along the length direction of the battery pack, and in the width direction of the battery pack, a plurality of rows of battery cells 91 are arranged, and each row of battery cells 91 may include a plurality of rows of battery cells 91 arranged in the length direction of the battery pack.

As shown in FIG. 12, the heat exchange plate 101 separates the two rows of battery cells 91, and there is a flow passage in the heat exchange plate 101. A heat exchange medium (liquid or air) may enter the heat exchange plate 101 from the inlet of the flow passage to cool or heat the heat exchange plate 101, thus cooling or heating the battery cells 91, and then the cold liquid flows out from the outlet of the flow passage to complete heat exchange with the heat exchange plate 101.

As shown in FIGS. 12 and 13, the heat exchange structure 100 may further include an inlet pipe 102 and an outlet pipe 103, the inlets of a plurality of heat exchange plates 101 are respectively connected to the inlet pipe 102, and the outlets of the plurality of heat exchange plates 101 are respectively connected to the outlet pipe 103. The inlet pipe 102 and the outlet pipe 103 are separately connected with each heat exchange plate 101, so that the pipes may be shared in the inlet area or the outlet area of the heat exchange medium. Since the areas for cooling or heating the battery cells are independent, the structure may be simplified without affecting the mutual heat exchange effect.

Optionally, as shown in FIG. 1, the heat exchange plate 101 extends along the length direction of the battery pack and contacts with the wide surface of the battery cell 91, so that the cooling contact surface is larger to ensure the cooling effect. The inlet pipe 102 and the outlet pipe 103 extend along the width direction of the battery pack, and the inlet pipe 102 and the outlet pipe 103 are provided at the first side in the length direction of the battery pack, so that the heat exchange plates 101 are conveniently connected.

Optionally, as shown in FIG. 1, the electrode of each battery cell unit 90 in a plurality of battery cell units 90 is located at the second side in the length direction of the battery pack, and is separated from the inlet pipe 102 and the outlet pipe 103 provided at the first side in the length direction of the battery pack, which is beneficial to the reasonable arrangement of the inlet pipe 102, the outlet pipe 103 and the electrode lead-outs member of the battery cell units 90, with high space utilization rate and convenient installation and later maintenance.

Moreover, the inlet pipe 102 and the outlet pipe 103 of the heat exchange structure 100 locating at different ends from the electrodes of the battery cell unit 90 is beneficial to prevent the condensed water appearing on the heat exchange structure 100 from easily contacting the electrodes, and may effectively reduce or even avoid the risk of short circuit of the battery pack caused by this situation.

In the present invention, an insulator may be arranged between each row of cells 91 or between each row of cells 91 to improve the high-voltage creepage distance of battery cells on both sides.

In the present invention, any one of the plurality of battery cell units 90 may be charged or discharged independently, and some or all of the battery cell units 90 may be charged or discharged in series as a whole.

With this design, the battery pack may have at least a first operation mode and a second operation mode. In the first operation mode, any one of the plurality of battery cell units 90 of the battery pack may be charged independently, and at this time, the battery pack may be suitable for a charging platform with a low charging voltage, so as to have a conventional charging mode; in the second operation mode, some or all of the battery cell units 90 may be connected in series. At this time, the battery pack may be suitable for the charging platform with higher charging voltage, so as to have a fast charging mode. Therefore, compared with the solution in the related art that the battery pack may only be charged by a charging platform with a fixed voltage, the battery pack provided by the present invention may have a charging platform suitable for different voltages, that is, a voltage platform compatible with a plurality of voltages, which is beneficial to daily use.

Moreover, because a plurality of battery cell units 90 in the battery pack may have different operation modes, the number of battery cell units 90 in discharging in different operation modes may be different, so as to have different discharging modes and provide different voltage power supply modes for electric drivers (such as motor of vehicles) of electric device.

In addition, in the present invention, by providing a single battery case to accommodate the plurality of battery cell units 90, it is unnecessary to arrange a plurality of battery cases for accommodating the single battery cell units 90, and moreover, the plurality of battery cell units 90 may share components (such as the heat exchange structure 100), which may save battery package space and improve energy density.

As mentioned above, in the present invention, because each battery cell unit 90 uses independent air passages (such as the first air passage 20 and the second air passage 40), when one battery cell unit 90 fails, the work of other battery cell units 90 will not be affected, thus improving the reliability of plural battery cell units 90 individually as the output of the entire battery pack or in series as the output of the entire battery pack, in other words, the reliability of the above-described first operation mode and second operation mode of the battery pack is ensured by making each of the battery cell units 90 employ independent air passages (the first air passage 20 and the second air passage 40).

As mentioned above, the number of the plurality of battery cell units 90 is not limited in the present invention, and two or more battery cell units 90 may be designed, and the number of battery cells 91 included in each battery cell unit 90 is not limited, which may be designed according to the voltage of the charging platform that needs to be compatible, so as to meet the requirements of charging platforms that may convert voltages and be compatible with different voltages.

The present invention does not limit the voltage at which the battery pack is suitable for charging or discharging. Optionally, in an embodiment of the present invention, the voltage of the battery pack suitable for charging or discharging may be 400V to 800V, including 400 V and 800 V. For example, at present, the compatible charging piles are 400V and 800V. In order to adapt their voltages, two battery cell units 90 suitable for the 400V charging platform may be designed, or four battery cell units 90 suitable for the 200V charging platform may be designed as long as the requirements are met, and the applicable voltages of the designed single battery cell units 90 are not limited.

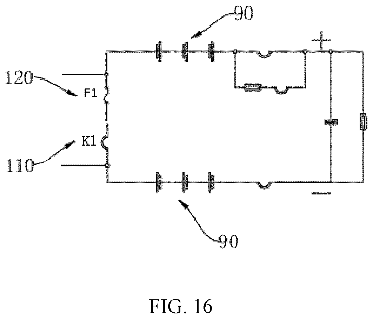

For example, two battery cell units 90 suitable for a 400V charging platform are provided. When the connected charging pile is 400V, only a single battery cell unit 90 needs to be charged. At this time, the switch (K1) 110 (as shown in FIG. 16) between the two battery cell units 90 may be turned off, and the positive and negative poles of one battery cell unit 90 are connected to both ends of the power distribution unit to complete the circuit connection, while the other battery cell unit 90 is not charged. When the connected charging pile is 800V, the two battery cell units 90 work in series. At this time, the switch 110 between the two battery cell units 90 is turned on, and the anode of one battery cell unit 90 is connected with the cathode of the other battery cell unit 90. The two ends of the circuit after series connection may be connected with the two ends of the power distribution unit (not shown) to complete the circuit connection. At this time, both cell units 90 can be charged, so it is compatible with 400V and 800V charging platforms (charging piles).

When the number of battery cell units 90 is three or more, in the second operation mode, other battery cell units 90 of two or more battery cell units 90 may be connected in series while the remaining battery cell units 90 do not participate in charging or discharging.

When assembling a storage battery pack, the anode of each battery cell unit 90 may be electrically connected with the anode of a power distribution unit, such as a battery disconnect unit (BDU). The power distribution unit is not shown in the figures, and the cathode of each battery cell unit 90 is suitable for being electrically connected with the cathode of the power distribution unit. Moreover, a plurality of battery cell units 90 are sequentially arranged on a series circuit of the battery pack, and both ends of the series circuit are respectively connected to the anode and the cathode of the power distribution unit. The switch 110 is provided on the series circuit of a plurality of battery cell units 90, and is used for opening or closing the series circuit between the plurality of battery cell units 90.

The power distribution unit (battery disconnect unit) is a battery energy distribution unit, which is an important part of the high-voltage circuit of the electric device. It may distribute the high-voltage power of the power storage apparatus to the electric device, so that the power storage apparatus may supply power to the electric device. In addition, the power distribution unit may distribute the high-voltage charging current of alternating current and direct current charging interfaces to the power storage apparatus to charge the power storage apparatus.

As shown in FIG. 16, the battery pack may further include a switch 110, and the switch 110 is arranged on the series circuit where a plurality of battery cell units 90 are located. In this way, by controlling the switch 110 to selectively open and close the series circuit, that is, by turning on and turning off the switch 110, a plurality of battery cell units 90 may at least be charged or discharged independently, or a plurality of battery cell units 90 may be charged or discharged in series, so that the battery pack may be switched between the first operation mode and the second operation mode.

The type of the switch 110 is not limited in the present invention, which may be a relay, an electronic switch, a thyristor, a switching diode, etc., as long as the switch 110 plays an open circuit function in the series circuit when a single battery cell unit 90 needs to be operated, and plays a closed circuit function in the series circuit when a plurality of battery cell units 90 need to be operated.

In an embodiment where the switch 110 is a relay, the relay may significantly speed up the switching time, eliminate the arc and noise existing in electromechanical devices, and in essence, has better reliability and predictability and longer service life.

In the present invention, as shown in FIG. 6, the power storage apparatus may further include a current fuse (F1) 120, which may be arranged on a series circuit where a plurality of battery cell units 90 are located. Due to the current fuse 120, when the high-voltage circuit of the battery pack is short-circuited, not only the series circuit may be disconnected by the switch 110 to disconnect the high-voltage circuit of the battery pack, but also the high-voltage circuit may be disconnected in time by the current fuse 120, which may avoid the risk of thermal runaway caused by high-voltage arc discharge and provide the safety performance of the power storage apparatus.

The battery cell units 90 in the battery pack are independent of each other, including that the electrode connection of the battery cell units 90 are independent of each other, the sampling of battery cells 91 are independent of each other, the above heat exchange plates 101 are independent of each other, the first air passages 20 connected to each battery cell units 90 are independent of each other and the second air passages 40 connected to the first air passages 20 are independent of each other. That is, the structural arrangements that affect the performance of the battery pack are separated into independent whole, and the failure of any one of them will not bring adverse effects to the other. It is equivalent to the situation that two independent battery packs are assembled side by side, and if the battery pack is used in a vehicle and any side of the electric vehicle fails to power during high-speed driving, the other side may normally provide power for use. The risk that the car suddenly has no power due to battery pack problems is greatly reduced, effectively ensuring the safety of the battery pack and the car.

According to another aspect of the present invention, there is provided an electric device, which includes a main body of the device and the battery pack described above, and the battery pack is installed on the main body of the device and used for supplying power to the main body of the device.

The electric device may be a vehicle, a mobile phone, a portable device, a notebook computer, a ship, a spacecraft, an electric toy and an electric tool, and so on. The vehicle may be a fuel car, an gas car or a new energy car, and the new energy car may be a pure electric car, a hybrid car or an extended-range car and so on, and the electric toy may be a fixed or mobile electric toy, such as a game machine, an electric car toy, an electric ship toy and an electric airplane toy. The electric tool includes a metal cutting electric tool, a grinding electric tool, an assembling electric tool and a railway electric tool, which are not limited in the present invention.

Optionally, when the electric device is a vehicle, the battery pack of the present invention may be installed on the vehicle body to provide power for driving the vehicle.

## Claims

1. A battery pack case, wherein the battery pack case comprises an accommodating space (10), and the accommodating space (10) is configured to accommodate a plurality of battery cell units (90); wherein
the battery pack case further comprises a plurality of first air passages (20), which are mutually independent, are provided in the battery pack case such that battery cells (91) of each of the plurality of battery cell units (90) can communicate with the outside of a battery pack through a separate first air passage (20); and
a plurality of explosion-proof valves of the battery pack (80);
**characterized in that** the battery pack case is also provided with a plurality of independent second air passages (40); one end of the plurality of second air passages (40) is suitable for communicating with the corresponding first air passages (20) respectively, and the other end is suitable for connecting with the corresponding explosion-proof valve of the battery pack (80);
wherein the plurality of battery cell units (90) are mutually independent,
wherein each of the plurality of battery cell units (90) is configured for charging independently in a first operation mode, and some or all of the plurality of battery cell units (90) are configured to be connected in series for charging in a second operation mode.

2. The battery pack case according to claim 1, wherein the battery pack case comprises a bottom plate structure (30);
a plurality of the first air passages (20) are provided inside the bottom plate structure (30).

3. The battery pack case according to claim 2, wherein the bottom plate structure (30) comprises a first plate (31), a second plate (32) and at least one partition beam (33);
the first plate (31) and the second plate (32) are stacked, and a cavity is provided between the first plate (31) and the second plate (32);
the partition beam (33) is arranged in the cavity to divide the cavity into the plurality of first air passages (20);
the first plate (31) is provided with a plurality of weak areas (34) communicating with the cavity, and the positions of the plurality of weak areas (34) correspond to explosion-proof valves (911) of the battery cells in corresponding battery cell units (90).

4. The battery pack case according to claim 3, wherein the second plate (32) comprises a body (321) and a side plate (322), and the side plate (322) is provided at a peripheral edge of the body (321) to define a concave portion (323), and the concave portion (323) and the first plate (31) jointly define the cavity;
preferably, wherein one end of the side plate (322) far away from the body (321) has an extension portion (324), and the extension portion (324) is arranged in parallel with the body (321) and connected with the first plate (31).

5. The battery pack case according to claim 3 or 4, wherein a cross section of the partition beam (33) gradually increases in the direction from the first plate (31) to the second plate (32).

6. The battery pack case according to any one of claims 3-5, wherein the partition beam (33) is provided with a first plane, and the first plane is in surface contact with the first plate (31); and/or,
the partition beam (33) is provided with a second plane, and the second plane is in surface contact with the second plate (32);
preferably, wherein the partition beam (33) and the first plate (31) are in no-pressure contact, pressure connection, welding or bonding; and/or,
the partition beam (33) and the second plate (32) are in no-pressure contact, pressure connection, welding or bonding.

7. The battery pack case according to any one of claims 3-6, wherein a connection part between the partition beam (33) and the first plate (31) is arranged in a staggered manner with the weak area (34).

8. The battery pack case according to any one of claims 3-7, wherein the bottom plate structure (30) further comprises at least one supporting block (35);
at least one supporting block (35) is provided in the cavity, and an upper end of the supporting block (35) is connected to the first plate (31), and a lower end of the supporting block (35) is connected to the second plate (32).

9. The battery pack case according to any one of claims 1-8, wherein the plurality of battery cell units (90) are arranged along a width direction of the battery pack case; the plurality of the first air passages (20) are arranged along the width direction of the battery pack case;
preferably, wherein the number of the battery cell units (90) is two, and the two battery cell units (90) are symmetrically arranged with respect to a center of the width of the battery pack case;
the number of the first air passages is two, and the two first air passages (20) are symmetrically arranged with respect to the center of the width of the battery pack case;
preferably, the battery pack case has two explosion-proof valves of the battery pack (80), and the two explosion-proof valves of the battery pack (80) are installed on a side frame in a longitudinal direction of the battery pack case;
the side frame is provided with two second air passages (40);
one of the two second air passages (40) communicates with one first air passage (20) and one explosion-proof valve of the battery pack (80), and the other of the two second air passages (40) communicates with another first air passage (20) and another explosion-proof valve of the battery pack (80).

10. The battery pack case according to any one of claims 1-9, wherein the battery pack case comprises a tray (50) and an upper cover (60);
the tray (50) comprises a bottom plate structure (30) and a side frame (51), wherein a lower end of the side frame (51) is connected to a peripheral edge of the bottom plate structure (30), and the upper cover (60) is connected to an upper end of the side frame (51);
the tray (50) and the upper cover (60) jointly define the accommodating space (10);
the first air passage (20) is provided inside the bottom plate structure (30).

11. A battery pack, comprising a plurality of battery cell units (90) and the battery pack case according to any one of claims 1-10; wherein
a plurality of battery cell units (90) are provided in the accommodating space (10);
each battery cell unit (90) corresponds to one of the first air passages (20), and each battery cell unit (90) communicates with the outside of the battery pack through the corresponding first air passage (20);
preferably, wherein each battery cell unit (90) comprises a plurality of battery cells, and each battery cell (91) is provided with an explosion-proof valve (911) of the battery cell (91), and the explosion-proof valve (911) of the battery cell (91) is provided corresponding to an inlet of the first air passage (20);
preferably, wherein the battery pack comprises a bottom plate structure (30), and the first air passage (20) is provided in the bottom plate structure (30); the explosion-proof valve (911) of the battery cell (91) is located at a lower end of the battery cell, such that the explosion-proof valve (911) of the battery cell (91) is capable of corresponding to the inlet of the first air passage (20).

12. The battery pack according to claim 11, wherein the battery pack further comprises a heat exchange structure (100);
the heat exchange structure (100) comprises a plurality of heat exchange plates (101), and the plurality of heat exchange plates (101) are arranged in parallel, and the heat exchange plate (101) is provided between two adjacent rows of battery cells;
wherein flow passages inside the plurality of heat exchange plates (101) are independently arranged;
preferably, wherein the heat exchange structure (100) further comprises an inlet pipe (102) and an outlet pipe (103);
inlets of the plurality of heat exchange plates (101) are respectively connected to the inlet pipe (102), and outlets of the plurality of heat exchange plates (101) are respectively connected to the outlet pipe (103);
preferably, wherein the heat exchange plate (101) extends along a length direction of the battery pack, and the inlet pipe (102) and the outlet pipe (103) extend along a width direction of the battery pack;
the inlet pipe (102) and the outlet pipe (103) are provided at a first side in the length direction of the battery pack;
preferably, wherein an electrode of each of the plurality of battery cell units (90) is located at a second side in the length direction of the battery pack.

13. The battery pack according to any one of claims 11-12, wherein any of the plurality of battery cell units (90) is configured to independently be charged or discharged;
part or all of the battery cell units (90) in the plurality of battery cell units (90) are configured to be connected in series as a whole for charging or discharging.

14. An electric device, comprising a main body of device and the battery pack according to any one of claims 1-13, wherein the battery pack is installed to the main body of device and configured to supply power to the main body of device.

## Patentansprüche

1. Batteriepackgehäuse, wobei das Batteriepackgehäuse einen Aufnahmeraum (10) aufweist und der Aufnahmeraum (10) dazu konfiguriert ist, eine Mehrzahl von Batteriezelleneinheiten (90) aufzunehmen; wobei
das Batteriepackgehäuse ferner eine Mehrzahl von ersten Luftdurchlässen (20) aufweist, die voneinander unabhängig sind, in dem Batteriepackgehäuse derart vorgesehen sind, dass Batteriezellen (91) jeder der Mehrzahl von Batteriezelleneinheiten (90) mit außerhalb eines Batteriepacks durch einen separaten ersten Luftdurchlass (20) kommunizieren können; und
eine Mehrzahl von explosionssicheren Ventilen des Batteriepacks (80);
**dadurch gekennzeichnet, dass** das Batteriepackgehäuse auch mit einer Mehrzahl von unabhängigen zweiten Luftdurchlässen (40) versehen ist; wobei ein Ende der Mehrzahl von zweiten Luftdurchlässen (40) geeignet zum Kommunizieren mit jeweils den entsprechenden ersten Luftdurchlässen (20) ist und das andere Ende geeignet zum Verbinden mit dem entsprechenden explosionssicheren Ventil des Batteriepacks (80) ist;
wobei die Mehrzahl von Batteriezelleneinheiten (90) voneinander unabhängig ist,
wobei jede der Mehrzahl von Batteriezelleneinheiten (90) zum unabhängigen Laden in einem ersten Betriebsmodus konfiguriert ist und einige oder alle der Mehrzahl von Batteriezelleneinheiten (90) dazu konfiguriert sind, zum Laden in einem zweiten Betriebsmodus in Reihe geschaltet zu sein.

2. Batteriepackgehäuse gemäß Anspruch 1, wobei das Batteriepackgehäuse eine Bodenplattenstruktur (30) aufweist;
eine Mehrzahl der ersten Luftdurchlässe (20) innerhalb der Bodenplattenstruktur (30) vorgesehen ist.

3. Batteriepackgehäuse gemäß Anspruch 2, wobei die Bodenplattenstruktur (30) eine erste Platte (31), eine zweite Platte (32) und zumindest einen Trennbalken (33) aufweist;
die erste Platte (31) und die zweite Platte (32) gestapelt sind und ein Hohlraum zwischen der ersten Platte (31) und der zweiten Platte (32) vorgesehen ist;
der Trennbalken (33) in dem Hohlraum angeordnet ist, um den Hohlraum in die Mehrzahl erster Luftdurchlässe (20) zu unterteilen;
die erste Platte (31) mit einer Mehrzahl von schwachen Bereichen (34) versehen ist, die mit dem Hohlraum kommunizieren, und die Positionen der Mehrzahl von schwachen Bereichen (34) explosionssicheren Ventilen (911) der Batteriezellen in entsprechenden Batteriezelleneinheiten (90) entsprechen.

4. Batteriepackgehäuse gemäß Anspruch 3, wobei die zweite Platte (32) einen Körper (321) und eine Seitenplatte (322) aufweist und die Seitenplatte (322) an einer Umfangskante des Körpers (321) vorgesehen ist, um einen konkaven Abschnitt (323) zu definieren, und der konkave Abschnitt (323) und die erste Platte (31) gemeinsam den Hohlraum definieren;
wobei vorzugsweise ein Ende der Seitenplatte (322) weit entfernt von dem Körper (321) einen Erweiterungsabschnitt (324) aufweist und der Erweiterungsabschnitt (324) parallel zu dem Körper (321) angeordnet und mit der ersten Platte (31) verbunden ist.

5. Batteriepackgehäuse gemäß Anspruch 3 oder 4, wobei ein Querschnitt des Trennbalkens (33) in der Richtung von der ersten Platte (31) zu der zweiten Platte (32) allmählich zunimmt.

6. Batteriepackgehäuse gemäß einem der Ansprüche 3 bis 5, wobei der Trennbalken (33) mit einer ersten Ebene versehen ist und die erste Ebene in Oberflächenkontakt mit der ersten Platte (31) ist; und/oder
der Trennbalken (33) mit einer zweiten Ebene versehen ist und die zweite Ebene in Oberflächenkontakt mit der zweiten Platte (32) ist;
wobei vorzugsweise der Trennbalken (33) und die erste Platte (31) in drucklosem Kontakt, Druckverbindung, Schweißen oder Bonden sind; und/oder
der Trennbalken (33) und die zweite Platte (32) in drucklosem Kontakt, Druckverbindung, Schweißen oder Bonden sind.

7. Batteriepackgehäuse gemäß einem der Ansprüche 3 bis 6, wobei ein Verbindungsteil zwischen dem Trennbalken (33) und der ersten Platte (31) in einer versetzten Weise mit dem schwachen Bereich (34) angeordnet ist.

8. Batteriepackgehäuse gemäß einem der Ansprüche 3 bis 7, wobei die Bodenplattenstruktur (30) ferner zumindest einen Stützblock (35) aufweist;
zumindest ein Stützblock (35) in dem Hohlraum vorgesehen ist und ein oberes Ende des Stützblocks (35) mit der ersten Platte (31) verbunden ist und ein unteres Ende des Stützblocks (35) mit der zweiten Platte (32) verbunden ist.

9. Batteriepackgehäuse gemäß einem der Ansprüche 1 bis 8, wobei die Mehrzahl von Batteriezelleneinheiten (90) entlang einer Breitenrichtung des Batteriepackgehäuses angeordnet ist; die Mehrzahl der ersten Luftdurchlässe (20) entlang der Breitenrichtung des Batteriepackgehäuses angeordnet ist;
wobei vorzugsweise die Anzahl der Batteriezelleneinheiten (90) zwei ist und die zwei Batteriezelleneinheiten (90) symmetrisch in Bezug auf eine Mitte der Breite des Batteriepackgehäuses angeordnet sind;
die Anzahl der ersten Luftdurchlässe zwei ist und die zwei ersten Luftdurchlässe (20) symmetrisch in Bezug auf die Mitte der Breite des Batteriepackgehäuses angeordnet sind;
vorzugsweise das Batteriepackgehäuse zwei explosionssichere Ventile des Batteriepacks (80) aufweist und die zwei explosionssicheren Ventile des Batteriepacks (80) an einem Seitenrahmen in einer Längsrichtung des Batteriepackgehäuses installiert sind;
der Seitenrahmen mit zwei zweiten Luftdurchlässen (40) versehen ist;
einer der zwei zweiten Luftdurchlässe (40) mit einem ersten Luftdurchlass (20) und einem explosionssicheren Ventil des Batteriepacks (80) kommuniziert und der andere der zwei zweiten Luftdurchlässe (40) mit einem anderen ersten Luftdurchlass (20) und einem anderen explosionssicheren Ventil des Batteriepacks (80) kommuniziert.

10. Batteriepackgehäuse gemäß einem der Ansprüche 1 bis 9, wobei das Batteriepackgehäuse eine Schale (50) und eine obere Abdeckung (60) aufweist;
die Schale (50) eine Bodenplattenstruktur (30) und einen Seitenrahmen (51) aufweist, wobei ein unteres Ende des Seitenrahmens (51) mit einer Umfangskante der Bodenplattenstruktur (30) verbunden ist und die obere Abdeckung (60) mit einem oberen Ende des Seitenrahmens (51) verbunden ist;
die Schale (50) und die obere Abdeckung (60) gemeinsam den Aufnahmeraum (10) definieren;
der erste Luftdurchlass (20) innerhalb der Bodenplattenstruktur (30) vorgesehen ist.

11. Batteriepack, der eine Mehrzahl von Batteriezelleneinheiten (90) und das Batteriepackgehäuse gemäß einem der Ansprüche 1 bis 10 aufweist; wobei
eine Mehrzahl von Batteriezelleneinheiten (90) in dem Aufnahmeraum (10) vorgesehen ist;
jede Batteriezelleneinheit (90) einem der ersten Luftdurchlässe (20) entspricht und jede Batteriezelleneinheit (90) mit außerhalb des Batteriepacks durch den entsprechenden ersten Luftdurchlass (20) kommuniziert;
wobei vorzugsweise jede Batteriezelleneinheit (90) eine Mehrzahl von Batteriezellen aufweist und jede Batteriezelle (91) mit einem explosionssicheren Ventil (911) der Batteriezelle (91) versehen ist und das explosionssichere Ventil (911) der Batteriezelle (91) entsprechend einem Einlass des ersten Luftdurchlasses (20) vorgesehen ist;
wobei vorzugsweise der Batteriepack eine Bodenplattenstruktur (30) aufweist und der erste Luftdurchlass (20) in der Bodenplattenstruktur (30) vorgesehen ist; das explosionssichere Ventil (911) der Batteriezelle (91) an einem unteren Ende der Batteriezelle angeordnet ist, so dass das explosionssichere Ventil (911) der Batteriezelle (91) dem Einlass des ersten Luftdurchlasses (20) entsprechen kann.

12. Batteriepack gemäß Anspruch 11, wobei der Batteriepack ferner eine Wärmeaustauschstruktur (100) aufweist;
die Wärmeaustauschstruktur (100) eine Mehrzahl von Wärmeaustauschplatten (101) aufweist und die Mehrzahl von Wärmeaustauschplatten (101) parallel angeordnet ist und die Wärmeaustauschplatte (101) zwischen zwei benachbarten Reihen von Batteriezellen vorgesehen ist;
wobei Strömungsdurchlässe innerhalb der Mehrzahl von Wärmeaustauschplatten (101) unabhängig angeordnet sind;
wobei vorzugsweise die Wärmeaustauschstruktur (100) ferner ein Einlassrohr (102) und ein Auslassrohr (103) aufweist;
Einlässe der Mehrzahl von Wärmeaustauschplatten (101) jeweils mit dem Einlassrohr (102) verbunden sind und Auslässe der Mehrzahl von Wärmeaustauschplatten (101) jeweils mit dem Auslassrohr (103) verbunden sind;
wobei sich vorzugsweise die Wärmeaustauschplatte (101) entlang einer Längenrichtung des Batteriepacks erstreckt und sich das Einlassrohr (102) und das Auslassrohr (103) entlang einer Breitenrichtung des Batteriepacks erstrecken;
das Einlassrohr (102) und das Auslassrohr (103) an einer ersten Seite in der Längenrichtung des Batteriepacks vorgesehen sind;
wobei sich vorzugsweise eine Elektrode jeder der Mehrzahl von Batteriezelleneinheiten (90) an einer zweiten Seite in der Längenrichtung des Batteriepacks befindet.

13. Batteriepack gemäß einem der Ansprüche 11 bis 12, wobei jede beliebige der Mehrzahl von Batteriezelleneinheiten (90) dazu konfiguriert ist, unabhängig geladen oder entladen zu werden;
ein Teil oder alle der Batteriezelleneinheiten (90) in der Mehrzahl von Batteriezelleneinheiten (90) dazu konfiguriert sind, als Ganzes zum Laden oder Entladen in Reihe geschaltet zu sein.

14. Elektrische Vorrichtung, die einen Vorrichtungshauptkörper und den Batteriepack gemäß einem der Ansprüche 1 bis 13 aufweist, wobei der Batteriepack an dem Vorrichtungshauptkörper installiert ist und dazu konfiguriert ist, dem Vorrichtungshauptkörper Leistung zuzuführen.

## Revendications

1. Un boîtier de bloc-batterie, dans lequel le boîtier de bloc-batterie comprend un espace de logement (10), et l'espace de logement (10) est configuré pour loger une pluralité d'unités de cellules de batterie (90) ; dans lequel
le boîtier de bloc-batterie comprend en outre une pluralité de premiers passages d'air (20), qui sont mutuellement indépendants, disposés dans le boîtier de bloc-batterie de telle sorte que les cellules de batterie (91) de chacune de la pluralité de d'unités de cellules de batterie (90) puissent communiquer avec l'extérieur d'un bloc-batterie par l'intermédiaire d'un premier passage d'air (20) séparé ; et
une pluralité de soupapes antidéflagrantes du bloc-batterie (80) ;
**caractérisé en ce que** le boîtier de bloc-batterie dispose également d'une pluralité de deuxièmes passages d'air indépendants (40) ; une extrémité de la pluralité de deuxièmes passages d'air (40) est adaptée pour communiquer respectivement avec les premiers passages d'air (20) correspondants, et l'autre extrémité est adaptée pour une connexion avec la soupape antidéflagrante correspondante du bloc-batterie (80) ;
dans lequel la pluralité d'unités de cellules de batterie (90) sont mutuellement indépendantes,
dans lequel chacune de la pluralité d'unités de cellules de batterie (90) est configurée pour charger indépendamment dans un premier mode de fonctionnement, et certaines ou toutes de la pluralité d'unités de cellules de batterie (90) sont configurées pour être connectées en série pour charger dans un deuxième mode de fonctionnement.

2. Boîtier de bloc-batterie selon la revendication 1, dans lequel le boîtier de bloc-batterie comprend une structure de plaque inférieure (30) ;
une pluralité de premiers passages d'air (20) sont disposés à l'intérieur de la structure de plaque inférieure (30).

3. Boîtier de bloc-batterie selon la revendication 2, dans lequel la structure de plaque inférieure (30) comprend une première plaque (31), une deuxième plaque (32) et au moins une traverse de séparation (33) ;
la première plaque (31) et la deuxième plaque (32) sont superposées, et une cavité est disposée entre la première plaque (31) et la deuxième plaque (32) ;
la traverse de séparation (33) est agencée dans la cavité pour diviser la cavité en la pluralité de premiers passages d'air (20) ;
la première plaque (31) dispose d'une pluralité de zones faibles (34) communiquant avec la cavité, et les emplacements de la pluralité de zones faibles (34) correspondent aux soupapes antidéflagrantes (911) des cellules de batterie dans les unités de cellules de batterie correspondantes (90).

4. Boîtier de bloc-batterie selon la revendication 3, dans lequel la deuxième plaque (32) comprend un corps (321) et une plaque latérale (322), et la plaque latérale (322) est disposée au niveau d'un bord périphérique du corps (321) pour définir une partie concave (323), et la partie concave (323) et la première plaque (31) définissent conjointement la cavité ;
de préférence, dans lequel une extrémité de la plaque latérale (322) éloignée du corps (321) présente une partie d'extension (324), et la partie d'extension (324) est agencée parallèlement au corps (321) et connectée avec la première plaque (31).

5. Boîtier de bloc-batterie selon la revendication 3 ou 4, dans lequel une section transversale de la traverse de séparation (33) augmente progressivement dans la direction de la première plaque (31) vers la deuxième plaque (32).

6. Boîtier de bloc-batterie selon l'une quelconque des revendications 3 à 5, dans lequel la traverse de séparation (33) dispose d'un premier plan, et le premier plan est en contact de surface avec la première plaque (31) ; et/ou, la traverse de séparation (33) dispose d'un deuxième plan, et le deuxième plan est en contact de surface avec la deuxième plaque (32) ;
de préférence, dans lequel la traverse de séparation (33) et la première plaque (31) sont en contact sans pression, connexion par pression, soudage ou liaison ; et/ou,
la traverse de séparation (33) et la deuxième plaque (32) sont en contact sans pression, connexion par pression, soudage ou liaison.

7. Boîtier de bloc-batterie selon l'une quelconque des revendications 3 à 6, dans lequel une partie de connexion entre la traverse de séparation (33) et la première plaque (31) est agencée en quinconce avec la zone faible (34).

8. Boîtier de bloc-batterie selon l'une quelconque des revendications 3 à 7, dans lequel la structure de plaque inférieure (30) comprend en outre au moins un bloc de support (35) ;
au moins un bloc de support (35) est disposé dans la cavité, et une extrémité supérieure du bloc de support (35) est connectée à la première plaque (31), et une extrémité inférieure du bloc de support (35) est connectée à la deuxième plaque (32).

9. Boîtier de bloc-batterie selon l'une quelconque des revendications 1 à 8, dans lequel la pluralité d'unités de cellules de batterie (90) sont agencées le long d'une direction de largeur du boîtier de bloc-batterie ; la pluralité de premiers passages d'air (20) sont agencés le long de la direction de largeur du boîtier de bloc-batterie ;
de préférence, dans lequel le nombre d'unités de cellules de batterie (90) est de deux, et les deux unités de cellules de batterie (90) sont agencées symétriquement par rapport à un centre de la largeur du boîtier de bloc-batterie ;
le nombre des premiers passages d'air est de deux, et les deux premiers passages d'air (20) sont agencés symétriquement par rapport au centre de la largeur du boîtier de bloc-batterie ;
de préférence, le boîtier de bloc-batterie présente deux soupapes antidéflagrantes de bloc-batterie (80), et les deux soupapes antidéflagrantes de bloc-batterie (80) sont installées sur un cadre latéral dans une direction longitudinale du boîtier de bloc-batterie ;
le cadre latéral dispose de deux deuxièmes passages d'air (40) ;
l'un des deux deuxièmes passages d'air (40) communique avec un premier passage d'air (20) et une soupape antidéflagrante du bloc-batterie (80), et l'autre des deux deuxièmes passages d'air (40) communique avec un autre premier passage d'air (20) et une autre soupape antidéflagrante du bloc-batterie (80).

10. Boîtier de bloc-batterie selon l'une quelconque des revendications 1 à 9, dans lequel le boîtier de bloc-batterie comprend un plateau (50) et un couvercle supérieur (60) ;
le plateau (50) comprend une structure de plaque inférieure (30) et un cadre latéral (51), dans lequel une extrémité inférieure du cadre latéral (51) est connectée à un bord périphérique de la structure de plaque inférieure (30), et le couvercle supérieur (60) est connecté à une extrémité supérieure du cadre latéral (51) ;
le plateau (50) et le couvercle supérieur (60) définissent conjointement l'espace de logement (10) ;
le premier passage d'air (20) est disposé à l'intérieur de la structure de plaque inférieure (30).

11. Un bloc-batterie, comprenant une pluralité d'unités de cellules de batterie (90) et le boîtier de bloc-batterie selon l'une quelconque des revendications 1 à 10 ; dans lequel
une pluralité d'unités de cellules de batterie (90) sont disposées dans l'espace de logement (10) ;
chaque unité de cellule de batterie (90) correspond à l'un des premiers passages d'air (20), et chaque unité de cellule de batterie (90) communique avec l'extérieur du bloc-batterie par l'intermédiaire du premier passage d'air correspondant (20) ;
de préférence, dans lequel chaque unité de cellule de batterie (90) comprend une pluralité de cellules de batterie, et chaque cellule de batterie (91) dispose d'une soupape antidéflagrante (911) de la cellule de batterie (91), et la soupape antidéflagrante (911) de la cellule de batterie (91) est disposée en correspondance avec une entrée du premier passage d'air (20) ;
de préférence, dans lequel le bloc-batterie comprend une structure de plaque inférieure (30), et le premier passage d'air (20) est disposé dans la structure de plaque inférieure (30) ; la soupape antidéflagrante (911) de la cellule de batterie (91) est située au niveau d'une extrémité inférieure de la cellule de batterie, de telle sorte que la soupape antidéflagrante (911) de la cellule de batterie (91) soit capable de correspondre à l'entrée du premier passage d'air (20).

12. Bloc-batterie selon la revendication 11, dans lequel le bloc-batterie comprend en outre une structure d'échange thermique (100) ;
la structure d'échange thermique (100) comprend une pluralité de plaques d'échange thermique (101), et la pluralité de plaques d'échange thermique (101) sont agencées en parallèle, et la plaque d'échange thermique (101) est disposée entre deux rangées adjacentes de cellules de batterie ;
dans lequel les passages d'écoulement à l'intérieur de la pluralité de plaques d'échange thermique (101) sont agencées de indépendamment;
de préférence, dans lequel la structure d'échange thermique (100) comprend en outre un tuyau d'entrée (102) et un tuyau de sortie (103) ;
des entrées de la pluralité de plaques d'échange thermique (101) sont respectivement connectées au tuyau d'entrée (102), et des sorties de la pluralité de plaques d'échange thermique (101) sont respectivement connectées au tuyau de sortie (103) ;
de préférence, dans lequel la plaque d'échange thermique (101) s'étend dans une direction de longueur du bloc-batterie, et le tuyau d'entrée (102) et le tuyau de sortie (103) s'étendent dans une direction de largeur du bloc-batterie ;
le tuyau d'entrée (102) et le tuyau de sortie (103) sont disposés au niveau d'un premier côté dans la direction de longueur du bloc-batterie ;
de préférence, dans lequel une électrode de chacune de la pluralité d'unités de cellules de batterie (90) est située au niveau d'un deuxième côté dans la direction de longueur du bloc-batterie.

13. Bloc-batterie selon l'une quelconque des revendications 11 à 12, dans lequel l'une quelconque de la pluralité d'unités de cellules de batterie (90) est configurée pour être chargée ou déchargée indépendamment ;
une partie ou la totalité des unités de cellules de batterie (90) dans la pluralité d'unités de cellules de batterie (90) sont configurées pour être connectées en série comme un ensemble pour la charge ou la décharge.

14. Un dispositif électrique, comprenant un corps principal de dispositif et le bloc-batterie selon l'une quelconque des revendications 1 à 13, dans lequel le bloc-batterie est installé sur le corps principal du dispositif et configuré pour alimenter en puissance le corps principal du dispositif.
